# EUROPÄISCHE PATENTANMELDUNG

(11) **EP 1 574 665 A1**
(43) Veröffentlichungstag der Anmeldung: **14.09.2005**
(21) Anmeldenummer: 04005466.0
(22) Anmeldetag: 08.03.2004
(51) Int. Cl.: F01D 5/06, C22C 38/18, B32B 15/01, F01D 5/28

(54) **Rotor für eine Strömungsmaschine**

(71) Anmelder: SIEMENS AKTIENGESELLSCHAFT, 80333 München (DE)
(72) Erfinder: Diesler, Michael, 45527 Hattingen (DE); Hoffstadt, Uwe, 45468 Muelheim a.d. Ruhr (DE); Luft, Helmut, 45133 Essen (DE); Wieghadt, Kai, Dr., 44795 Bochum (DE)

(57) **Zusammenfassung**

Die Erfindung betrifft einen Rotor (1) und ein Verfahren zur Herstellung eines Rotors (1) für eine Strömungsmaschine, welcher Rotor (1) entlang einer Rotationsachse (4) gerichtet ist und ein erstes Material (9) aufweist, dadurch gekennzeichnet, dass zumindest ein axial gerichteter Bereich (2) des Rotors (1) derart ausgebildet ist, dass ein zweites Material (8) den axial gerichteten Bereich (2) ummantelt und das zweite Material (8) durch Auftragsschweißung auf das erste Material (9) aufgebracht wird.

## Beschreibung

Die Erfindung betrifft einen Rotor für eine Strömungsmaschine, welcher Rotor entlang einer Rotationsachse gerichtet ist und einen thermisch besonders belastbaren Oberflächenbereich und ein erstes Material aufweist. Des weiteren betrifft die Erfindung ein Verfahren zur Herstellung eines Rotors für eine Strömungsmaschine, welcher Rotor entlang einer Rotationsachse gerichtet ist und aus einem ersten Material gebildet wird.

Beim Bau von Strömungsmaschinen und insbesondere im Dampfturbinenbau sind für die Herstellung und für die Eigenschaften des Rotors besondere Bedingungen notwendig. In einer Hochdruck-Dampfturbine liegen die Dampfeintrittstemperaturen des Eintrittsdampfes bei etwa 650° C. Bei diesen Temperaturen sind besondere Bedingungen für die chemischen und Werkstoffeigenschaften des Rotormaterials erforderlich. So sollte der Bereich des Rotors, der die Dampfeintrittstemperatur von bis etwa 650° C erfährt, bevorzugt eine hohe Warmfestigkeit aufweisen. Dieser Bereich wird somit als thermisch besonders belastbarer Oberflächenbereich ausgeführt.

In Strömungsrichtung kühlt sich der Dampf ab und die Dampftemperaturen sinken. Die Temperaturbelastung des Rotors sinkt dadurch. An diesen Stellen des Rotors sind demnach andere Eigenschaften gefordert. Hier werden z. B. Eigenschaften wie eine hohe Streckgrenzanforderung und eine sehr gute Kerbschlagfähigkeit und Bruchzähigkeit gefordert. Besonders in einer kombinierten Hochdruck-Niederdruck-Dampfturbine ändern sich durch den sinkenden Temperaturverlauf die chemischen und Werkstoffeigenschaften des Rotors in Strömungsrichtung.

In der DE 196 07 736 A1 wird eine Turbinenwelle vorgeschlagen, die für hohe thermische Belastungen eingesetzt werden kann und unterschiedliche Materialien umfasst. Hierbei wird eine axial zweiteilige Turbinenwelle, insbesondere für eine Dampfturbine, welche entlang einer Rotationsachse gerichtet ist, in zwei axial gerichtete Bereiche eingeteilt, wobei der erste axial gerichtete Bereich und der an den ersten axialen Bereich anschließende zweite axial gerichtete Bereich unterschiedliche Stahllegierungen mit unterschiedlichen Gewichtsprozenten an Chrom aufweisen und axial voneinander befestigt sind.

Aufgabe der Erfindung ist es, einen Rotor, insbesondere für eine Dampfturbine, anzugeben, der bei hohen thermischen Belastungen mit einem in axialer Richtung abnehmenden Temperaturverlauf eingesetzt werden kann. Eine weitere Aufgabe der Erfindung besteht darin, ein Verfahren zur Herstellung eines solchen Rotors anzugeben.

Erfindungsgemäß wird die auf den Rotor bezogene Aufgabe gelöst durch einen Rotor für eine Strömungsmaschine, welcher Rotor entlang einer Rotationsachse gerichtet ist und einen thermisch besonders belastbaren Oberflächenbereich und ein erstes Material aufweist, wobei der thermisch belastete Oberflächenbereich von einem zweiten temperaturfesten Material ummantelt ist.

Die auf das Verfahren hin gerichtete Aufgabe wird gelöst durch ein Verfahren zur Herstellung eines Rotors für eine Strömungsmaschine, welcher Rotor entlang einer Rotationsachse gerichtet ist und aus einem ersten Material gebildet wird, wobei zumindest ein axial gerichteter Bereich des Rotors mit einem zweiten Material durch Auftragsschweißung und/oder Schrumpfung ummantelt wird.

Der Vorteil besteht unter anderem darin, dass gefährdete Bereiche auf dem Rotor, d.h. Bereiche, die einer erhöhten Temperatur ausgesetzt sind, gezielt geändert werden. Es kann mit vergleichsweise geringem Aufwand ein kleiner Bereich des gesamten Rotors durch z.B. ein auftragsgeschweißtes zweites Material verstärkt werden.

Als gefährdeter oder als axial gerichteter Bereich des Rotors, der die Eigenschaft einer besonderen thermischen Belastbarkeit aufweisen soll, ist z. B. der Einströmbereich, ein Ausgleichskolben oder der Bereich des Rotors, der für eine erste Laufschaufelreihe ausgebildet ist, anzusehen.

Zweckmäßigerweise ist das zweite Material ein temperaturfestes Material, das eine Stahllegierung umfasst, beinhaltend einen Gewichtsanteil von Chrom > 1,0 %. Der erste Bereich umfasst eine Stahllegierung, beinhaltend einen Gewichtsanteil von Chrom im wesentlichen < als 1,0 %. Durch diese Maßnahme muss nicht der gesamte Rotor aus einer Stahllegierung hergestellt werden, die einen Gewichtsanteil von Chrom von > 1,0 % hat.

Anhand der nachfolgenden Beschreibung werden Ausführungsbeispiele der Erfindung unter Bezugnahme auf die Zeichnungen noch näher erläutert.

Es zeigen schematisch und nicht maßstäblich:
- Figur 1: einen Längsschnitt durch einen Rotor mit einem aufgeschweißten Bereich,
- Figur 2: einen Längsschnitt durch einen Rotor mit einem aufgeschrumpften Bereich,
- Figur 3: einen Längsschnitt durch einen Rotor mit einem aufgeschrumpften und aufgeschweißten Bereich,
- Figur 4: einen Querschnitt durch einen Rotor mit einem aufgeschrumpften und geschweißten Bereich,
- Figur 5: einen Querschnitt durch einen Rotor mit einem aufgeschrumpften Bereich,
- Figur 6: einen Querschnitt durch einen Rotor mit einem aufgeschweißten Bereich.

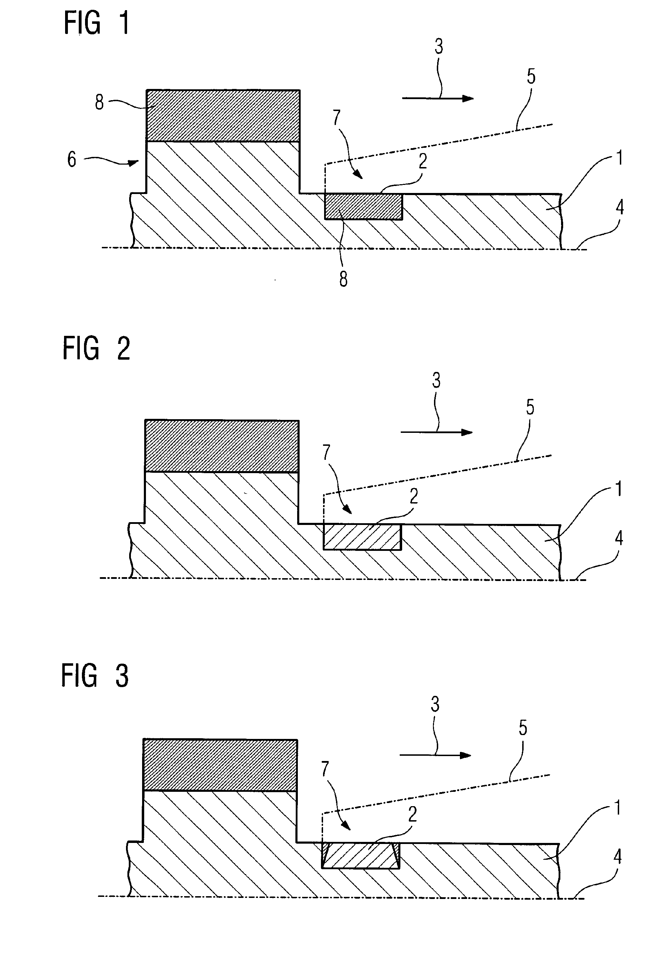

In Figur 1 ist ein Längsschnitt durch einen Rotor 1 mit einem aufgeschweißten Bereich 2 zu sehen. Ein Strömungsmedium strömt hierbei in einer Strömungsrichtung 3, die im wesentlichen mit einer Rotationsachse 4 des Rotors 1 zusammenfällt, entlang. Das Strömungsmedium durchströmt einen Laufschaufelreihenbereich 5. Da ein axialer Schub durch den Impuls des Strömungsmediums auf den Rotor 1 entsteht, ist ein Ausgleichskolben 6, der derart ausgebildet ist, dass durch ihn eine Gegenkraft zum axialen Schub entsteht, vorgesehen. Ein thermisch hochbelasteter Bereich des Rotors 1 ist z. B. ein Einströmbereich 7 eines Dampfeintrittes.

Bei einem Einsatz des Rotors 1 in einer Hochdruck-Teilturbine, können in dem Einströmbereich 7 Temperaturen von etwa 650° C oder noch höher entstehen.

Der Rotor 1 weist ein erstes Material auf, das eine Stahllegierung umfasst, beinhaltend einen Gewichtsanteil Chrom im wesentlichen < 1,0 % (alle nachfolgenden Angaben in Gewichtsprozent). Ein Bereich der besonders thermisch belastet wird, wie z. B. der Einströmbereich 7, wird mit einem zweiten Material 8 ummantelt. Das zweite Material umfasst ein temperaturfestes Material. Das temperaturfeste Material umfasst eine Stahllegierung, beinhaltend einen Gewichtsanteil von Chrom > 1,0 %.

Das zweite Material wird durch Auftragsschweißung auf die Rotorwelle angebracht.

In Figur 2 ist in einer alternativen Ausführungsform eine weitere Möglichkeit dargestellt, das zweite Material auf den Rotor aufzubringen. Hierbei liegt das zweite Material in Form einer Hülse vor, die auf dem Rotor 1 erhitzt und auf den Rotor aufgeschrumpft wird.

In Figur 3 ist eine weitere alternative Ausführungsform dargestellt. In dieser Ausführungsform wird der thermisch besonders belastbare Bereich mittels einer Kombination aus Aufschrumpfen und Aufschweißen auf den Rotor 1 befestigt.

Durch die hohe Warmfestigkeit des ersten Materials eignet sich dieser als Hochdruckteil einer kombinierten Hochdruck-Niederdruck-Dampfturbine selbst bei Dampfeintrittstemperaturen von über 550° C bis etwa 650° C.

Durch eine unterschiedliche Wahl des Chrom- und Nickelanteils in dem ersten Material und dem zweiten Material ist entsprechend den Anforderungen eine selektive Einstellung der Warmfestigkeit in dem ersten Material und der Zähigkeit in dem zweiten Material weitgehend unabhängig voneinander gegeben.

Im Gegensatz zu einer bekannten Turbinenwelle, die aus einem einheitlichen Werkstoff hergestellt ist, bedarf es hierbei keines Kompromisses zwischen Zeitstandsfestigkeit in dem thermisch höher belasteten zweiten Material und Zähigkeit in dem thermisch etwas weniger hochbelasteten ersten Material. Auch ergibt sich durch ähnlich zusammengesetzte Grundwerkstoffe nicht das Problem, dass in einer Übergangszone zwischen dem ersten Bereich und dem zweiten Bereich eine Vermischung der Grundwerkstoffe mit deutlich abweisenden Eigenschaften entsteht.

Vorzugsweise eignet sich der Rotor für die Verwendung in einer Dampfturbine, wobei der erste Bereich der Aufnahme der Laufschaufeln des Hochdruckteils der Dampfturbine und der zweite Bereich der Aufnahme der Laufschaufel des Niederdruckteils der Dampfturbine dient. Während eines Betriebes der Dampfturbine kann dabei der Hochdruckteil einer Dampfturbine Temperaturen von 550° C bis 650° C ausgesetzt sein, was eine gute Warmfestigkeit des ersten Bereiches, vor allem im oberflächennahen Bereich, erfordert.

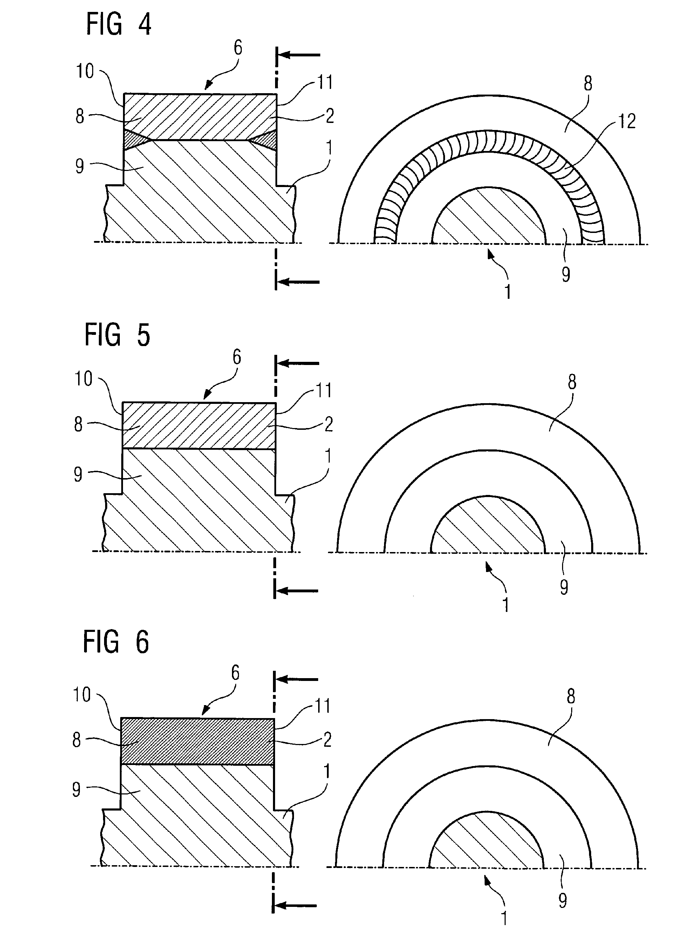

In Figur 4 ist ein Querschnitt und ein Längsschnitt durch den Ausgleichskolben 6 des Rotors 1 zu sehen. Der innere Teil des Rotors 1 besteht aus dem ersten Material 9 und ist mit dem zweiten Material 8 ummantelt. Das zweite Material 8 wird durch eine Kombination aus Aufschrumpfen und Auftragsschweißen auf den Rotor 1 aufgebracht. Das zweite Material wird hierbei zuerst auf das erste Material aufgeschrumpft und an einem Rand 10 und einem zweiten Rand 11 verschweißt. Eine Schweißnaht 12 wird hierbei rotationssymmetrisch ausgeführt.

In Figur 5 ist eine alternative Ausführungsform dargestellt. Hierbei wird das zweite Material 8 auf das erste Material aufgeschrumpft. Eine Schweißnaht ist hierbei nicht vorgesehen.

In der Figur 6 ist eine weitere Ausführungsform des Rotors, insbesondere des Ausgleichkolbens 6, dargestellt. Hierbei wird das zweite Material durch eine Auftragsschweißung auf das erste Material aufgebracht.

## Patentansprüche

1. Rotor (1) für eine Strömungsmaschine,
welcher Rotor (1) entlang einer Rotationsachse (4) gerichtet ist und einen thermisch besonders belastbaren Oberflächenbereich (2) und ein erstes Material (9) aufweist,
**dadurch gekennzeichnet, dass**
der thermisch belastete Oberflächenbereich (2) von einem zweiten temperaturfesten Material (8) ummantelt ist.

2. Rotor (1) nach Anspruch 1,
**dadurch gekennzeichnet, dass**
der thermisch belastete Oberflächenbereich (2) als Einströmbereich ausgebildet ist.

3. Rotor (1) nach Anspruch 1,
**dadurch gekennzeichnet, dass**
der thermisch belastete Oberflächenbereich (2) als Ausgleichskolben (6) ausgebildet ist.

4. Rotor (1) nach einem der Ansprüche 1 bis 3,
**dadurch gekennzeichnet, dass**
das zweite temperaturfeste Material eine Stahllegierung umfasst, beinhaltet einen Gewichtsanteil Cr größer als 1,0 %.

5. Rotor (1) nach einem der Ansprüche 1 bis 4,
**dadurch gekennzeichnet, dass**
das erste Material (9) eine Stahllegierung umfasst, beinhaltend einen Gewichtsanteil Cr im wesentlichen kleiner als 1,0 %.

6. Verfahren zur Herstellung eines Rotors (1) für eine Strömungsmaschine,
welcher Rotor (1) entlang einer Rotationsachse (4) gerichtet ist und aus einem ersten Material (9) gebildet wird,
**dadurch gekennzeichnet, dass**
zumindest ein axial gerichteter Bereich (2) des Rotors (1) mit einem zweiten Material (8) durch Auftragsschweißung und/oder Schrumpfung ummantelt wird.
